# EUROPEAN PATENT APPLICATION

(11) **EP 4 836 049 A1**
(43) Date of publication of application: **04.11.2026**
(21) Application number: 25221522.3
(22) Date of filing: 08.12.2025
(51) Int. Cl.: H01M 10/052, H01M 10/0565

(54) **SELF-SUPPORTING FLAME-RETARDANT POLYMER ELECTROLYTE, PREPARATION METHOD AND USE THEREOF, AND SOLID-STATE LITHIUM METAL BATTERY**

(30) Priority: 29.04.2025 CN 202510559898
(71) Applicant: Yibin Dongchi New Energy Technology Co., Ltd, Yibin City, Sichuan Province 644600 (CN)
(72) Inventor: SUN, Liqun, Yibin City, 644600 (CN); XIE, Haiming, Yibin City, 644600 (CN); TENG, Hong, Yibin City, 644600 (CN); LU, Wei, Yibin City, 644600 (CN)
(74) Representative: Gleiss Große Schrell und Partner mbB

(57) **Abstract**

Provided are a self-supporting flame-retardant polymer electrolyte, a preparation method and use thereof, and a solid-state lithium metal battery. The self-supporting flame-retardant polymer electrolyte includes: a polymer skeleton, formed by polymerization of an enenitrile substance, a phosphate ester containing an unsaturated carbon-carbon double bond, and a cross-linking agent; and succinonitrile, triethyl phosphate, and a lithium salt, all dispersed in the polymer skeleton.

## Description

### TECHNICAL FIELD

The present disclosure belongs to the technical field of solid-state lithium metal batteries, and in particular relates to a self-supporting flame-retardant polymer electrolyte, a preparation method and use thereof, and a solid-state lithium metal battery.

### BACKGROUND

In recent years, with the gradual development of electric vehicles (EVs), lithium metal batteries have received extensive attention. Unlike traditional lithium-ion batteries, lithium metal is used as the anode instead of graphite in lithium metal batteries (LMBs). Lithium metal possesses a high theoretical specific capacity (3860 mAh·g⁻¹) and a low electrochemical negative potential (-3.04 V vs. the standard hydrogen electrode), thereby enabling a higher energy density (exceeding 300 Wh/kg). Frustratingly, safety issues associated with traditional organic liquid electrolytes limit the further development of lithium metal batteries. Severe side reactions between the electrolyte and lithium metal can lead to the generation of lithium dendrites, which would expose the battery to the risks of short circuit, fire, and even explosion after piercing the separator. Furthermore, the inherent high flammability of the small organic molecules in the electrolyte significantly increases the potential security issues of the battery.

To address the problems faced by current liquid lithium metal batteries, solid-state lithium metal batteries have emerged. By replacing traditional electrolytes with leak-free and high-energy-density solid-state electrolytes (SSEs), the safety and energy density of lithium metal batteries are greatly improved. Among solid-state electrolytes, solid polymer electrolytes (SPEs) are regarded as promising candidates for large-scale industrialization due to the excellent mechanical properties and ease of processing. However, commonly used polymer matrices, such as polyethylene oxide (PEO), do not have the ability to self-extinguish when in contact with an open flame and still carry a risk of combustion.

### SUMMARY

In view of this, the present disclosure is to provide a self-supporting flame-retardant polymer electrolyte, a preparation method and use thereof, and a solid-state lithium metal battery. The self-supporting flame-retardant polymer electrolyte of the present disclosure exhibits good flame retardancy.

The present disclosure provides a self-supporting flame-retardant polymer electrolyte, including:
a cross-linked polymer skeleton, formed by polymerization of an enenitrile substance, a phosphate ester containing an unsaturated carbon-carbon double bond, and a cross-linking agent; and succinonitrile, triethyl phosphate, and a lithium salt, all dispersed in the cross-linked polymer skeleton.

In some embodiments, the phosphate ester containing the unsaturated carbon-carbon double bond includes at least one selected from the group consisting of dimethyl vinylphosphonate, diethyl vinylphosphonate, vinylphosphonic acid, and dimethyl allylphosphonate.

In some embodiments, a mass ratio of the enenitrile substance to the phosphate ester containing the unsaturated carbon-carbon double bond is in a range of 0.1-2 : 1.

In some embodiments, a mass ratio of the succinonitrile to the phosphate ester containing the unsaturated carbon-carbon double bond is in a range of 0.1-6 : 2.

In some embodiments, a mass ratio of the triethyl phosphate to the succinonitrile is in a range of 0.1-2 : 5.

In some embodiments, the lithium salt includes at least one selected from the group consisting of lithium perchlorate, lithium hexafluorophosphate, lithium nitrate, lithium difluoro(oxalato)borate, lithium trifluoromethanesulfonate, lithium bis(difluorosulfonyl)imide, lithium bis(trifluoromethanesulfonyl)imide, lithium fluoride, and lithium difluorophosphate; and a mass ratio of the lithium salt to the succinonitrile is in a range of 0.1-2 : 1.

In some embodiments, the cross-linking agent includes at least one selected from the group consisting of ethoxylated trimethylolpropane triacrylate, trimethylolpropane triacrylate, trimethylolpropane trimethacrylate, polyethylene glycol diacrylate, polyethylene glycol dimethacrylate, N,N-methylenebisacrylamide, triallyl isocyanurate, and poly(ethylene glycol) methyl ether methacrylate.

The present disclosure also provides a method for preparing the self-supporting flame-retardant polymer electrolyte as described in the above technical solutions, including the following steps:
mixing the enenitrile substance, the phosphate ester containing the unsaturated carbon-carbon double bond, the succinonitrile, the triethyl phosphate, the lithium salt, the cross-linking agent, and an initiator; and subjecting a resulting mixture to the polymerization under light irradiation to obtain the self-supporting flame-retardant polymer electrolyte.

The present disclosure also provides use of the self-supporting flame-retardant polymer electrolyte as described in the above technical solutions, or the self-supporting flame-retardant polymer electrolyte obtained by the method as described in the above technical solutions, in a solid-state lithium metal battery.

The present disclosure also provides a solid-state lithium metal battery, including a cathode material, a self-supporting flame-retardant polymer electrolyte, and an anode material, where the self-supporting flame-retardant polymer electrolyte is the self-supporting flame-retardant polymer electrolyte as described in the above technical solutions, or the self-supporting flame-retardant polymer electrolyte obtained by the method as described in the above technical solutions.

Compared with conventional technology, some embodiments of the present disclosure have the following beneficial effects:

The present disclosure provides a self-supporting flame-retardant polymer electrolyte, including: a cross-linked polymer skeleton, formed by polymerization of an enenitrile substance, a phosphate ester containing an unsaturated carbon-carbon double bond, and a cross-linking agent; and succinonitrile, triethyl phosphate, and a lithium salt, all dispersed in the cross-linked polymer skeleton.

In the self-supporting flame-retardant polymer electrolyte, the enenitrile substance containing an unsaturated double bond and the phosphate ester containing the unsaturated carbon-carbon double bond (unsaturated phosphate ester) are polymerized to form the polymer skeleton of the electrolyte, where the enenitrile substance contains nitrogen element, and the unsaturated phosphate ester contains phosphorus element. In the present disclosure, the enenitrile substance and the unsaturated phosphate ester which enable synergistic flame retardancy are introduced into the polymer skeleton, and in addition, succinonitrile which has non-combustible properties and triethyl phosphate which has flame-retardant effects are introduced into the polymer skeleton, such that a dual flame-retardant effect is achieved, and a resulting material can self-extinguish immediately upon exposure to open flame, without any sustained combustion, demonstrating good flame retardancy. Furthermore, raw materials for the electrolyte of the present disclosure include enenitrile substances and succinonitrile, which contain cyano functional groups with ultra-high oxidation resistance. The prepared self-supporting flame-retardant polymer electrolyte has an excellent high-voltage resistance, with an electrochemical window reaching up to 4.8 V, making it compatible with high-nickel NCM811 cathode. When the self-supporting flame-retardant polymer electrolyte of the present disclosure is applied to lithium metal batteries, the high-voltage Li∥NCM811 battery delivers a capacity retention rate of up to 90% after 100 cycles, indicating good cycling stability.

The present disclosure also provides a method for preparing the self-supporting flame-retardant polymer electrolyte as described in the above technical solutions. The method involves initiating double bonds polymerization under light irradiation, which is simple to operate, involves raw materials of rich sources, and is low-cost, thereby offering new insights for the industrialization of highly safe polymer electrolytes.

### BRIEF DESCRIPTION OF THE DRAWINGS

In order to illustrate the technical solutions in the embodiments of the present disclosure or the prior art more clearly, a brief introduction to the drawings required for the embodiments will be provided below. Obviously, the drawings in the following description are merely some of the embodiments of the present disclosure, and those of ordinary skill in the art can also obtain other drawings according to these drawings without involving any inventive effort.
FIG. 1 shows an optical photograph of a self-supporting flame-retardant polymer electrolyte prepared in Example 1;
FIG. 2A shows an SEM (scanning electron microscope) comparison image of self-supporting flame-retardant polymer electrolyte membranes prepared in Example 1, FIG. 2B shows an SEM comparison image of self-supporting flame-retardant polymer electrolyte membranes prepared in Example 2, and FIG. 2C shows an SEM comparison image of self-supporting flame-retardant polymer electrolyte membranes prepared in Example 3;
FIG. 3 shows an SEM image of a polymer electrolyte membrane prepared in Comparative Example 1;
FIG. 4 shows an LSV (linear sweep voltammetry) graph of the self-supporting flame-retardant polymer electrolyte prepared in Example 2;
FIG. 5 shows a cycling performance graph of the lithium battery assembled with the self-supporting flame-retardant polymer electrolyte prepared in Example 3, a lithium metal anode, and a LiNi_{0.8}Co_{0.1}Mn_{0.1}O₂ cathode at 0.5C;
FIG. 6 shows charge/discharge curves of the lithium battery assembled with the self-supporting flame-retardant polymer electrolyte prepared in Example 3, a lithium metal anode, and a LiNi_{0.8}Co_{0.1}Mn_{0.1}O₂ cathode at 0.5C;
FIG. 7A shows flame retardancy test results for the self-supporting electrolyte membranes prepared in Example 1, FIG. 7B shows flame retardancy test results for the self-supporting electrolyte membranes prepared in Example 2, FIG. 7C shows flame retardancy test results for the self-supporting electrolyte membranes prepared in Example 3, and FIG. 7D shows flame retardancy test results for the self-supporting electrolyte membranes prepared in Comparative Example 1;
FIG. 8 shows an LSV graph of the self-supporting electrolyte membrane prepared in Comparative Example 1;
FIG. 9 shows a cycling performance graph of the lithium metal battery assembled with the self-supporting electrolyte membrane prepared in Comparative Example 1, a lithium metal anode, and a LiNi_{0.8}Co_{0.1}Mn_{0.1}O₂ cathode at 0.5C;
FIG. 10 shows a cycling performance graph of the lithium metal batteries assembled with the self-supporting electrolyte membranes prepared in Example 1 and Example 4, a lithium metal anode, and a LiNi_{0.8}Co_{0.1}Mn_{0.1}O₂ cathode at 0.5C;
FIG. 11 shows a cycling performance graph of the lithium metal batteries assembled with the self-supporting electrolyte membranes prepared in Example 1 and Example 5, a lithium metal anode, and a LiNi_{0.8}Co_{0.1}Mn_{0.1}O₂ cathode at 0.5C; and
FIG. 12 shows a cycling performance graph of the lithium metal batteries assembled with the self-supporting electrolyte membranes prepared in Example 1, Comparative Example 2, and Comparative Example 3, a lithium metal anode, and a LiNi_{0.8}Co_{0.1}Mn_{0.1}O₂ cathode at 0.5C.

### DETAILED DESCRIPTION OF THE EMBODIMENTS

The present disclosure provides a self-supporting flame-retardant polymer electrolyte, including: a cross-linked polymer skeleton, formed by polymerization of an enenitrile substance, a phosphate ester containing an unsaturated carbon-carbon double bond, and a cross-linking agent; and succinonitrile, triethyl phosphate, and a lithium salt, all dispersed in the cross-linked polymer skeleton.

In the present disclosure, unless otherwise specified, the materials and equipment used are commercially available in the art.

In some embodiments of the present disclosure, the self-supporting flame-retardant polymer electrolyte is a self-supporting membrane with a cross-linked structure, in which the enenitrile substance, the phosphate ester containing the unsaturated carbon-carbon double bond, and the cross-linking agent form the self-supporting cross-linked polymer skeleton via double bond polymerization, and the succinonitrile, the triethyl phosphate, and the lithium salt are all dispersed in the cross-linked polymer skeleton.

In some embodiments of the present disclosure, the enenitrile substance is acrylonitrile. The enenitrile substance contains cyano functional groups with oxidation resistance, which can provide the polymer electrolyte with excellent high-voltage resistance. The enenitrile substance is polymerized with the phosphate ester containing the unsaturated carbon-carbon double bond to obtain a polymer skeleton containing N and P elements, which can exert a synergistic flame-retardant effect.

In some embodiments of the present disclosure, the phosphate ester containing the unsaturated carbon-carbon double bond includes at least one selected from the group consisting of dimethyl vinylphosphonate, diethyl vinylphosphonate, vinylphosphonic acid, and dimethyl allylphosphonate.

In some embodiments of the present disclosure, a mass ratio of the enenitrile substance to the phosphate ester containing the unsaturated carbon-carbon double bond is in a range of (0.1-2):1, more preferably (0.1-1):1, and specifically 1:2 or 1:4. Due to the presence of cyano groups, the enenitrile substance possesses excellent oxidation resistance and can match higher voltages. Therefore, when the content of the enenitrile substance is appropriately increased, the cycling stability of the battery is better.

In some embodiments of the present disclosure, a mass ratio of the succinonitrile to the phosphate ester containing the unsaturated carbon-carbon double bond is in a range of (0.1-6):2, more preferably (3-5):2, and specifically 5:2 or 2:1. An increase in the content of the succinonitrile helps to improve the ionic conductivity of the electrolyte, thereby enhancing the ability of the electrolyte to transport lithium ions, which would lead to an increase in the specific discharge capacity of the corresponding battery. Furthermore, the cyano groups on succinonitrile also have an oxidation-resistant effect, providing the electrolyte with excellent high-voltage resistance, thereby improving the cycling stability of the corresponding battery when paired with a high-voltage cathode.

In some embodiments of the present disclosure, a mass ratio of the triethyl phosphate to the succinonitrile is in a range of (0.1-2):5, more preferably (0.1-1):5, and specifically 1:5. Triethyl phosphate can, to a certain extent, improve the ionic conductivity of the electrolyte, thereby increasing the specific discharge capacity of the battery. However, excessive triethyl phosphate can increase the viscosity of the system and cause side reactions with lithium metal, resulting in a decrease in the specific discharge capacity of the battery. Furthermore, the triethyl phosphate can enhance the flame-retardant effect.

In some embodiments of the present disclosure, the lithium salt includes at least one selected from the group consisting of lithium perchlorate, lithium hexafluorophosphate, lithium nitrate, lithium difluoro(oxalato)borate, lithium trifluoromethanesulfonate, lithium bis(difluorosulfonyl)imide, lithium bis(trifluoromethanesulfonyl)imide, lithium fluoride, and lithium difluorophosphate. The lithium salt provides lithium ions.

In some embodiments of the present disclosure, a mass ratio of the lithium salt to the succinonitrile is in a range of (0.1-2):1, more preferably (0.1-1):1, and specifically 1:1. The dosage of the lithium salt according to the range as described above results in a high ionic conductivity.

In some embodiments of the present disclosure, the cross-linking agent includes at least one selected from the group consisting of ethoxylated trimethylolpropane triacrylate, trimethylolpropane triacrylate, trimethylolpropane trimethacrylate, polyethylene glycol diacrylate, polyethylene glycol dimethacrylate, N,N-methylenebisacrylamide, triallyl isocyanurate, and poly(ethylene glycol) methyl ether methacrylate. The cross-linking agent is used to promote the cross-linking reaction of unsaturated double bonds, forming the self-supporting skeleton of the polymer electrolyte.

In some embodiments of the present disclosure, a mass ratio of the cross-linking agent to the phosphate ester containing the unsaturated carbon-carbon double bond is in a range of (1-3):2, more preferably (1-2):2, and specifically 1:1.

The present disclosure also provides a method for preparing the self-supporting flame-retardant polymer electrolyte as described in the above technical solutions, including the following steps:

mixing the enenitrile substance, the phosphate ester containing the unsaturated carbon-carbon double bond, the succinonitrile, the triethyl phosphate, the lithium salt, the cross-linking agent, and an initiator; and subjecting a resulting mixture to the polymerization under light irradiation to obtain the self-supporting flame-retardant polymer electrolyte.

In some embodiments of the present disclosure, the initiator includes at least one selected from the group consisting of 2-hydroxy-2-methyl-1-phenylpropan-1-one, 1-hydroxycyclohexyl phenyl ketone, 2-methyl-2-(4-morpholinyl)-1-[4-(methylthio)phenyl]-1-propanone, 1-hydroxycyclohexylbenzophenone, 2,4,6-trimethylbenzoyldiphenylphosphine oxide, benzophenone, 4-methylbenzophenone, and methyl benzoylformate. The initiator is used to initiate the cross-linking reaction of the unsaturated double bonds in the raw materials.

In some embodiments of the present disclosure, a mass ratio of the initiator to a total mass of other raw materials excluding the initiator is in a range of (0.1-2):100, more preferably 0.02: 1.5-1.6. The dosage of the initiator according to the range as described above would not cause the phenomenon of low degree of polymerization leading to failure in film formation, as well as the problem of high polymerization degree leading to high impedance.

In some embodiments of the present disclosure, mixing the enenitrile substance, the phosphate ester containing the unsaturated carbon-carbon double bond, the succinonitrile, the triethyl phosphate, the lithium salt, the cross-linking agent, and the initiator includes: conducting a first mixing on the enenitrile substance, the phosphate ester containing the unsaturated carbon-carbon double bond, the succinonitrile, the triethyl phosphate, the lithium salt, and the cross-linking agent; and then conducting a second mixing on an obtained mixture and the initiator to obtain a precursor.

In some embodiments, both the first mixing and the second mixing are conducted in an inert gas atmosphere, the first mixing and the second mixing are conducted by stirring; and in the present disclosure, there are no special requirements on the rotating speed and time for the stirring.

In some embodiments of the present disclosure, the method further includes, before the polymerization under the light irradiation, pouring the precursor into a mold, the polymerization under the light radiation being conducted by using a mercury lamp, with a light intensity of 350 W to 500 W, for a polymerization time of 1 min to 10 min, more preferably 3 min to 5 min. In the present disclosure, free radical cross-linking polymerization of unsaturated double bonds is initiated by the light irradiation.

The present disclosure also provides use of the self-supporting flame-retardant polymer electrolyte as described in the above technical solutions, or the self-supporting flame-retardant polymer electrolyte obtained by the method as described in the above technical solutions, in a solid-state lithium metal battery.

The present disclosure also provides a solid-state lithium metal battery, including an anode material, a self-supporting flame-retardant polymer electrolyte, and a cathode material, where the self-supporting flame-retardant polymer electrolyte is the self-supporting flame-retardant polymer electrolyte as described in the above technical solutions, or the self-supporting flame-retardant polymer electrolyte obtained by the method as described in the above technical solutions.

In some embodiments of the present disclosure, the cathode material includes one selected from the group consisting of a lithium iron phosphate material, lithium cobalt oxide material, a lithium nickel manganese oxide ternary material, and a nickel cobalt manganese ternary material; and the anode material is lithium metal.

In the present disclosure, the electrolyte is a self-supporting, nitrogen-phosphorus synergistic flame-retardant polymer electrolyte, which has a high ionic conductivity, a wide electrochemical window, and good flame retardancy. In addition, the method of the present disclosure is simple and can reduce battery costs. When the flame-retardant polymer electrolyte is applied to a lithium metal battery, the high-voltage Li∥NCM811 battery enables a capacity retention rate of up to 90% after 100 cycles. In contrast, a polymer electrolyte without the N-P skeleton, used as a comparative example, exhibits no flame-retardant effect, and the high-voltage Li∥NCM811 battery shows a capacity retention rate of only 23.3% after 70 cycles.

To further illustrate the present disclosure, the self-supporting flame-retardant polymer electrolyte, the preparation method and the use thereof, and the solid-state lithium metal battery provided by the present disclosure are described in detail below with the accompanying drawings and examples. However, these should not be construed as limiting the scope of the present disclosure.

### Example 1

0.2 g of trimethylolpropane trimethacrylate, 0.1 g of acrylonitrile, 0.2 g of dimethyl vinylphosphonate, 0.1 g of triethyl phosphate, 0.5 g of succinonitrile, 0.5 g of lithium bis(trifluoromethanesulfonyl)imide, and 0.02 g of 2-hydroxy-2-methyl-1-phenylpropan-1-one were mixed in an inert gas atmosphere, a resulting mixture was stirred at a rotational speed of 300 r/min to obtain a homogeneous precursor, and the homogeneous precursor was poured into a mold and subjected to light irradiation for 3 min by using a 350 W mercury lamp, to obtain a self-supporting flame-retardant polymer electrolyte membrane.

### Example 2

0.2 g of trimethylolpropane trimethacrylate, 0.1 g of acrylonitrile, 0.2 g of diethyl vinylphosphonate, 0.1 g of triethyl phosphate, 0.5 g of succinonitrile, 0.5 g of lithium bis(trifluoromethanesulfonyl)imide, and 0.02 g of 2-hydroxy-2-methyl-1-phenylpropan-1-one were mixed in an inert gas atmosphere, a resulting mixture was stirred at a rotational speed of 300 r/min to obtain a homogeneous precursor, and the homogeneous precursor was poured into a mold and subjected to light irradiation for 3 min by using a 350 W mercury lamp, to obtain a self-supporting flame-retardant polymer electrolyte membrane.

### Example 3

0.2 g of trimethylolpropane trimethacrylate, 0.1 g of acrylonitrile, 0.2 g of dimethyl allylphosphonate, 0.1 g of triethyl phosphate, 0.5 g of succinonitrile, 0.5 g of lithium bis(trifluoromethanesulfonyl)imide, and 0.02 g of 2-hydroxy-2-methyl-1-phenylpropan-1-one were mixed in an inert gas atmosphere, a resulting mixture was stirred at a rotational speed of 300 r/min to obtain a homogeneous precursor, and the homogeneous precursor was poured into a mold and subjected to light irradiation for 3 min by using a 350 W mercury lamp, to obtain a self-supporting flame-retardant polymer electrolyte membrane.

### Comparative Example 1

0.2 g of trimethylolpropane trimethacrylate, 0.5 g of succinonitrile, 0.35 g of lithium bis(trifluoromethanesulfonyl)imide, and 0.02 g of 2-hydroxy-2-methyl-1-phenylpropan-1-one were mixed in an inert gas atmosphere, a resulting mixture was stirred at a rotational speed of 300 r/min to obtain a homogeneous precursor, and the homogeneous precursor was poured into a mold and subjected to light irradiation for 3 min by using a 350 W mercury lamp, to obtain a self-supporting polymer electrolyte membrane.

### Example 4

0.2 g of trimethylolpropane trimethacrylate, 0.05 g of acrylonitrile, 0.2 g of dimethyl vinylphosphonate, 0.1 g of triethyl phosphate, 0.5 g of succinonitrile, 0.5 g of lithium bis(trifluoromethanesulfonyl)imide, and 0.02 g of 2-hydroxy-2-methyl-1-phenylpropan-1-one were mixed in an inert gas atmosphere, a resulting mixture was stirred at a rotational speed of 300 r/min to obtain a homogeneous precursor, and the homogeneous precursor was poured into a mold and subjected to light irradiation for 3 min by using a 350 W mercury lamp, to obtain a self-supporting flame-retardant polymer electrolyte membrane.

### Example 5

0.2 g of trimethylolpropane trimethacrylate, 0.1 g of acrylonitrile, 0.2 g of dimethyl vinylphosphonate, 0.1 g of triethyl phosphate, 0.4 g of succinonitrile, 0.5 g of lithium bis(trifluoromethanesulfonyl)imide, and 0.02 g of 2-hydroxy-2-methyl-1-phenylpropan-1-one were mixed in an inert gas atmosphere, a resulting mixture was stirred at a rotational speed of 300 r/min to obtain a homogeneous precursor, and the homogeneous precursor was poured into a mold and subjected to light irradiation for 3 min by using a 350 W mercury lamp, to obtain a self-supporting flame-retardant polymer electrolyte membrane.

### Comparative Example 2

0.2 g of trimethylolpropane trimethacrylate, 0.1 g of acrylonitrile, 0.2 g of dimethyl vinylphosphonate, 0.2 g of triethyl phosphate, 0.4 g of succinonitrile, 0.5 g of lithium bis(trifluoromethanesulfonyl)imide, and 0.02 g of 2-hydroxy-2-methyl-1-phenylpropan-1-one were mixed in an inert gas atmosphere, a resulting mixture was stirred at a rotational speed of 300 r/min to obtain a homogeneous precursor, and the homogeneous precursor was poured into a mold and subjected to light irradiation for 3 min by using a 350 W mercury lamp, to obtain a self-supporting flame-retardant polymer electrolyte membrane.

### Comparative Example 3

0.2 g of trimethylolpropane trimethacrylate, 0.1 g of acrylonitrile, 0.2 g of dimethyl vinylphosphonate, 0.4 g of succinonitrile, 0.5 g of lithium bis(trifluoromethanesulfonyl)imide, and 0.02 g of 2-hydroxy-2-methyl-1-phenylpropan-1-one were mixed in an inert gas atmosphere, a resulting mixture was stirred at a rotational speed of 300 r/min to obtain a homogeneous precursor, and the homogeneous precursor was poured into a mold and subjected to light irradiation for 3 min by using a 350 W mercury lamp, to obtain a self-supporting flame-retardant polymer electrolyte membrane.

### Morphology Characterization

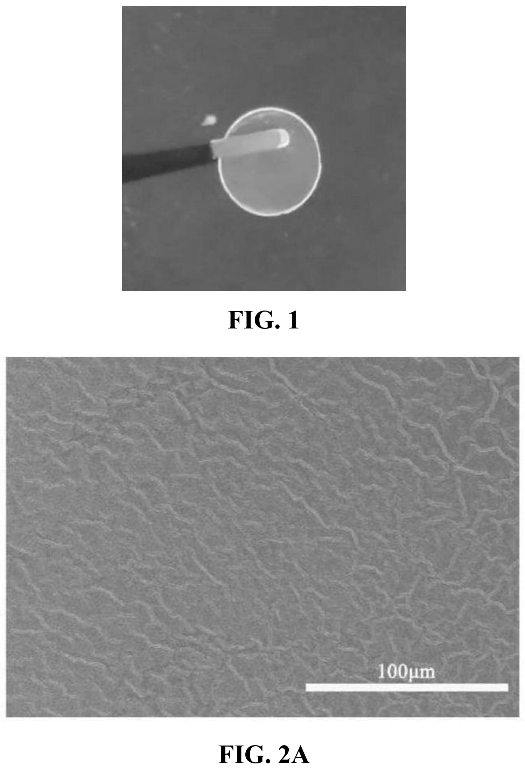

(1) FIG. 1 shows an optical photograph of the self-supporting flame-retardant polymer electrolyte membrane prepared in Example 1.
   As can be seen from FIG. 1, the self-supporting flame-retardant polymer electrolyte membrane is a colourless and transparent self-supporting membrane.

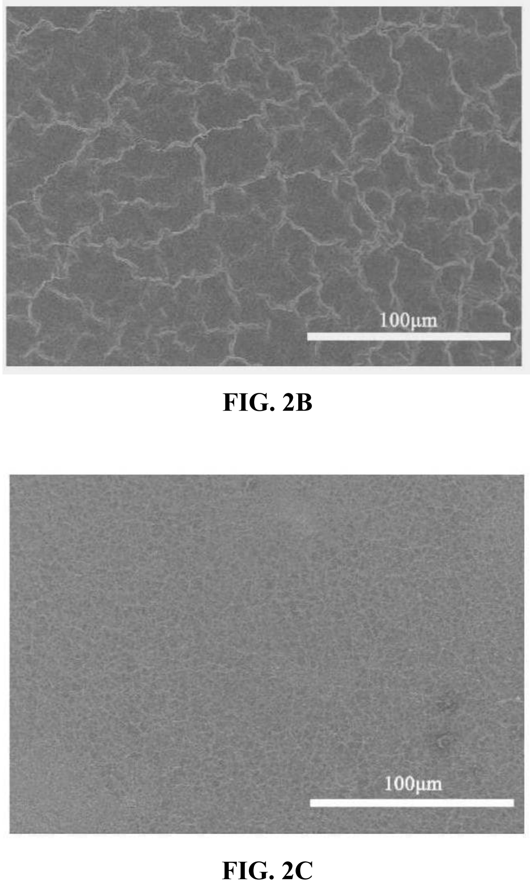

(2) FIGs. 2A to 2C show the SEM comparison images of the self-supporting flame-retardant polymer electrolyte membranes prepared in Example 1, Example 2, and Example 3, where FIG. 2A represents Example 1, FIG. 2B represents Example 2, and FIG. 2C represents Example 3.
   As can be seen from FIGs. 2A to 2C, the microscopic cross-linked network structures of the electrolyte membranes obtained in the above three examples exhibit different morphologies. Most of the cross-linked structure in Example 1 tends to be in the same direction, while the cross-linked structures in Examples 2 and 3 are more inclined towards a fishing network, and the structure in Example 3 has smaller and denser cross-linked domains than that in Example 2. The differences in the cross-linked structures are attributed to the different structures of the phosphate esters containing unsaturated carbon-carbon double bonds in the three examples.

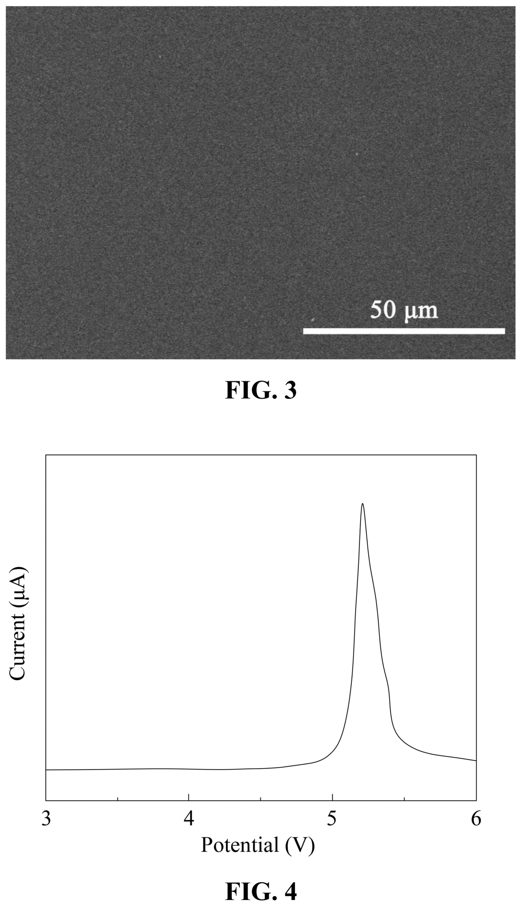

(3) FIG. 3 shows an SEM image of the polymer electrolyte membrane prepared in Comparative Example 1.

As can be seen from FIG. 3, the electrolyte membrane obtained in Comparative Example 1 shows no obvious formation of a cross-linked structure.

### Performance tests

(1) FIG. 4 shows the LSV graph of the self-supporting flame-retardant polymer electrolyte membrane prepared in Example 2.
   As can be seen from FIG. 4, the electrochemical window of the self-supporting flame-retardant polymer electrolyte is 4.8 V, indicating good oxidation resistance.

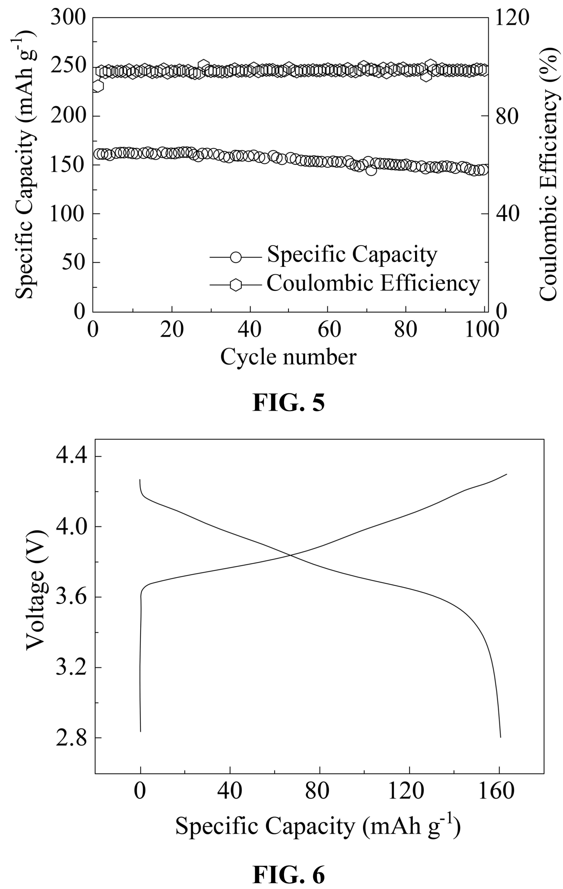

(2) FIG. 5 shows the cycling performance graph of the lithium metal battery assembled with the self-supporting flame-retardant polymer electrolyte membrane prepared in Example 3, a lithium metal anode and a LiNi_{0.8}Co_{0.1}Mn_{0.1}O₂ cathode at 0.5C.
   As can be seen from FIG. 5, the lithium metal battery assembled with the self-supporting flame-retardant polymer electrolyte membrane, a lithium metal anode, and a LiNi_{0.8}Co_{0.1}Mn_{0.1}O₂ cathode delivers a specific discharge capacity of up to 162.89 mAh·g⁻¹ at 0.5C, with a capacity retention rate of 90% after 100 cycles.
(3) FIG. 6 shows the charge/discharge curves of the lithium metal battery assembled with the self-supporting flame-retardant polymer electrolyte membrane prepared in Example 3, a lithium metal anode, and a LiNi_{0.8}Co_{0.1}Mn_{0.1}O₂ cathode at 0.5C.
   As can be seen from FIG. 6, the lithium metal battery assembled with the self-supporting flame-retardant polymer electrolyte membrane, a lithium metal anode, and a LiNi_{0.8}Co_{0.1}Mn_{0.1}O₂ cathode enables a Coulombic efficiency of up to 98% at 0.5C. The high Coulombic efficiency indicates a good reversibility.

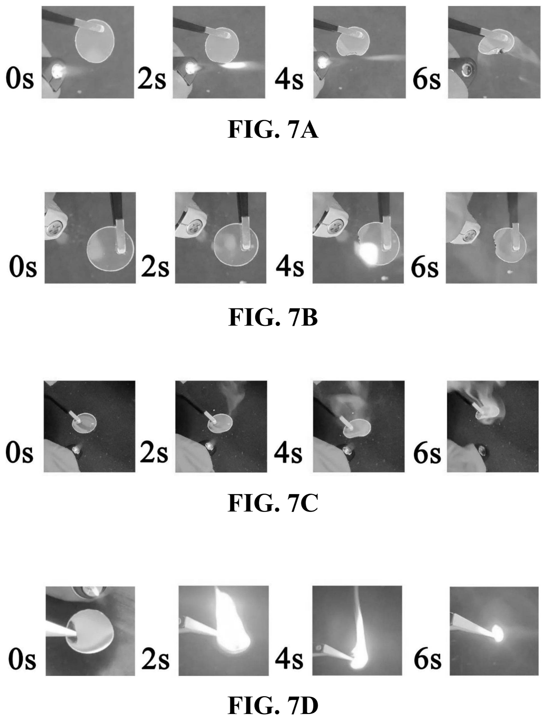

(4) FIGs. 7A to 7D show the flame retardancy test results for the self-supporting electrolyte membranes prepared in Example 1, Example 2, Example 3, and Comparative Example 1, where FIG. 7A represents the electrolyte obtained in Example 1, FIG. 7B represents the electrolyte obtained in Example 2, FIG. 7C represents the electrolyte obtained in Example 3, and FIG. 7D represents the electrolyte obtained in Comparative Example 1.
   As can be seen from FIGs. 7A to 7D, the self-supporting flame-retardant electrolytes of Examples 1, 2, and 3 show no open flame or combustion phenomenon during continuous contact with the flame for up to 6 seconds, exhibiting self-extinguishing with white smoke. In contrast, the self-supporting electrolyte membrane of Comparative Example 1 burned vigorously upon contact with the flame until the whole electrolyte membrane decomposed after 6 seconds. From the flame retardancy data from Comparative Example 1, it can be seen that the polymer containing only nitrogen has poor flame retardancy; it melts upon contact with the flame and ignites after more than 2 seconds. In contrast, the polymer skeleton in Example 1 contains both N and P, which provides synergistic flame retardancy, resulting in an effective flame-retardant effect.

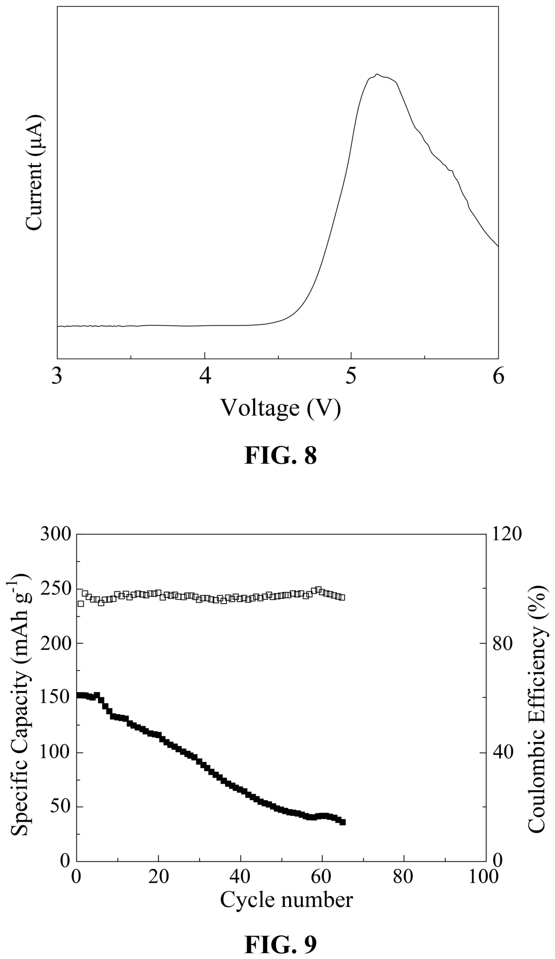

(5) FIG. 8 shows the LSV graph of the self-supporting electrolyte membrane prepared in Comparative Example 1.
   As can be seen from FIG. 8, the electrochemical window of the self-supporting flame-retardant electrolyte prepared in Comparative Example 1 is 4.3 V. Compared with the self-supporting flame-retardant electrolyte membrane prepared in Example 2, it has a weaker high-voltage resistance.
(6) FIG. 9 shows the cycling performance graph of the lithium metal battery assembled with the self-supporting electrolyte membrane prepared in Comparative Example 1, a lithium metal anode, and a LiNi_{0.8}Co_{0.1}Mn_{0.1}O₂ cathode at 0.5C.
   As can be seen from FIG. 9, the lithium metal battery assembled with the self-supporting electrolyte membrane prepared in Comparative Example 1, a lithium metal anode, and a LiNi_{0.8}Co_{0.1}Mn_{0.1}O₂ cathode delivers a specific discharge capacity of 152 mAh·g⁻¹ at 0.5C. The battery capacity decays rapidly during cycling, indicating poor cycling stability. The high-voltage Li∥NCM811 battery shows a capacity retention rate of only 23.3% after 70 cycles.

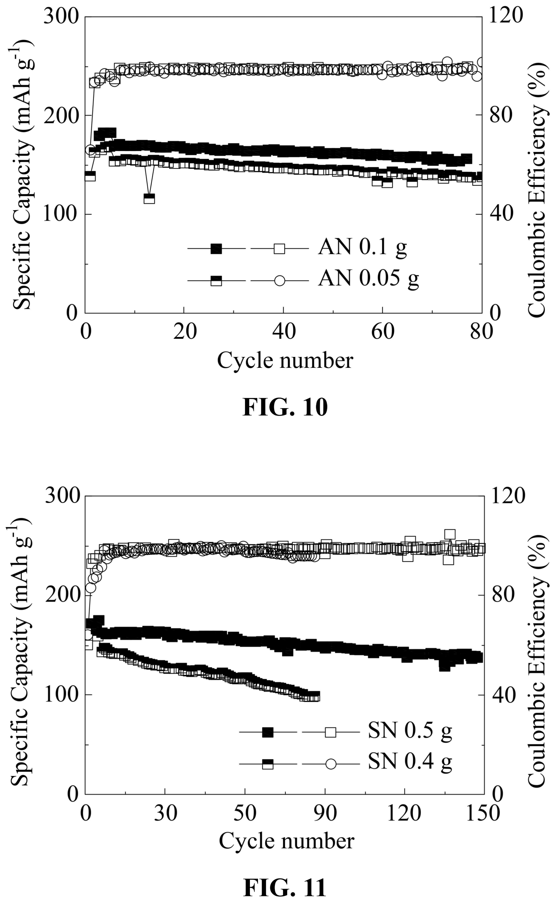

(7) FIG. 10 shows the cycling performance graph of the lithium metal batteries assembled with the self-supporting electrolyte membranes prepared in Example 1 and Example 4, a lithium metal anode, and a LiNi_{0.8}Co_{0.1}Mn_{0.1}O₂ cathode at 0.5C.
   As can be seen from FIG. 10, the lithium metal battery assembled with the self-supporting electrolyte membrane prepared in Example 4, a lithium metal anode and a LiNi_{0.8}Co_{0.1}Mn_{0.1}O₂ cathode has a lower specific discharge capacity at 0.5 C than that in Example 1, and the capacity retention rate of the lithium metal battery corresponding to Example 4 is 89.5%, which is lower than that of the lithium metal battery corresponding to Example 1 (92.3%) when it is cycled to the 77th cycle.
(8) FIG. 11 shows the cycling performance graph of the lithium metal batteries assembled with the self-supporting electrolyte membranes prepared in Example 1 (SN 0.5g) and Example 5 (SN 0.4g), a lithium metal anode, and a LiNi_{0.8}Co_{0.1}Mn_{0.1}O₂ cathode at 0.5C.
   As can be seen from FIG. 11, the lithium metal battery assembled with the self-supporting electrolyte membrane prepared in Example 5, a lithium metal anode, and a LiNi_{0.8}Co_{0.1}Mn_{0.1}O₂ cathode has a lower specific discharge capacity at 0.5 C than that in Example 1, and the capacity retention rate of the lithium metal battery corresponding to Example 5 is 68.8%, which is lower than that of the lithium metal battery corresponding to Example 1 (92.9%) when it is cycled to the 86th cycle.

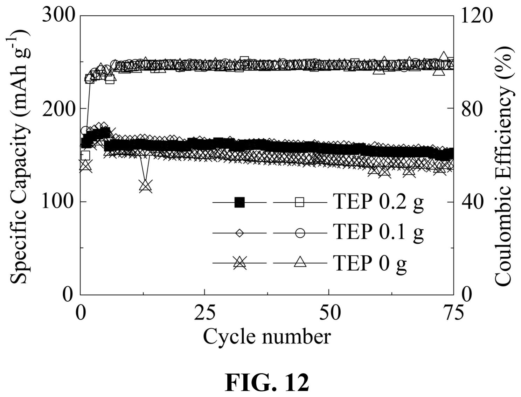

(9) FIG. 12 shows the cycling performance graph of the lithium metal batteries assembled with the self-supporting electrolyte membranes prepared in Example 1 (Triethyl Phosphate TEP 0.1g), Comparative Example 2 (TEP 0.2g), and Comparative Example 3 (TEP 0g), a lithium metal anode, and a LiNi_{0.8}Co_{0.1}Mn_{0.1}O₂ cathode at 0.5C.

As can be seen from FIG. 12, the lithium metal battery assembled with the self-supporting electrolyte membrane prepared in Comparative Example 2, a lithium metal anode, and a LiNi_{0.8}Co_{0.1}Mn_{0.1}O₂ cathode delivers a specific discharge capacity of up to 162.99 mAh g⁻¹ at 0.5 C, and the lithium metal battery assembled with the self-supporting electrolyte membrane prepared in Comparative Example 3, a lithium metal anode, and a LiNi_{0.8}Co_{0.1}Mn_{0.1}O₂ cathode delivers a specific discharge capacity of up to 154.85 mAh g⁻¹ at 0.5 C. However, both are lower than the maximum specific discharge capacity of 170.33 mAh g⁻¹ at 0.5 C of the lithium metal battery assembled with the self-supporting electrolyte membrane prepared in Example 1, a lithium metal anode, and a LiNi_{0.8}Co_{0.1}Mn_{0.1}O₂ cathode.

Although the embodiments described above have provided a detailed description of the present disclosure, they are only a part of, rather than all of the embodiments of the present disclosure. All other embodiments that can be obtained according to the embodiments of the present disclosure without inventive efforts shall fall within the scope of the disclosure.

## Claims

1. A self-supporting flame-retardant polymer electrolyte, comprising:
a cross-linked polymer skeleton, formed by polymerization of an enenitrile substance, a phosphate ester containing an unsaturated carbon-carbon double bond, and a cross-linking agent; and
succinonitrile, triethyl phosphate, and a lithium salt, all dispersed in the cross-linked polymer skeleton; wherein
a mass ratio of the enenitrile substance to the phosphate ester containing the unsaturated carbon-carbon double bond is in a range of 0.1-2 : 1;
a mass ratio of the succinonitrile to the phosphate ester containing the unsaturated carbon-carbon double bond is in a range of 0.1-6 : 2; and
a mass ratio of the triethyl phosphate to the succinonitrile is in a range of 0.1-2 : 5.

2. The self-supporting flame-retardant polymer electrolyte of claim 1, wherein the phosphate ester containing the unsaturated carbon-carbon double bond comprises at least one selected from the group consisting of dimethyl vinylphosphonate, diethyl vinylphosphonate, vinylphosphonic acid, and dimethyl allylphosphonate.

3. The self-supporting flame-retardant polymer electrolyte of claim 1, wherein the lithium salt comprises at least one selected from the group consisting of lithium perchlorate, lithium hexafluorophosphate, lithium nitrate, lithium difluoro(oxalato)borate, lithium trifluoromethanesulfonate, lithium bis(difluorosulfonyl)imide, lithium bis(trifluoromethanesulfonyl)imide, lithium fluoride, and lithium difluorophosphate; and
a mass ratio of the lithium salt to the succinonitrile is in a range of 0.1-2 : 1.

4. The self-supporting flame-retardant polymer electrolyte of claim 1, wherein the cross-linking agent comprises at least one selected from the group consisting of ethoxylated trimethylolpropane triacrylate, trimethylolpropane triacrylate, trimethylolpropane trimethacrylate, polyethylene glycol diacrylate, polyethylene glycol dimethacrylate, N,N-methylenebisacrylamide, triallyl isocyanurate, and poly(ethylene glycol) methyl ether methacrylate.

5. A method for preparing the self-supporting flame-retardant polymer electrolyte of any one of claims 1 to 4, comprising the following steps:
mixing the enenitrile substance, the phosphate ester containing the unsaturated carbon-carbon double bond, the succinonitrile, the triethyl phosphate, the lithium salt, the cross-linking agent, and an initiator; and subjecting a resulting mixture to the polymerization under light irradiation to obtain the self-supporting flame-retardant polymer electrolyte.

6. Use of the self-supporting flame-retardant polymer electrolyte of any one of claims 1 to 4, or the self-supporting flame-retardant polymer electrolyte obtained by the method of claim 5 in a solid-state lithium metal battery.

7. A solid-state lithium metal battery, comprising a cathode material, a self-supporting flame-retardant polymer electrolyte, and an anode material,
wherein the self-supporting flame-retardant polymer electrolyte is the self-supporting flame-retardant polymer electrolyte of any one of claims 1 to 4, or the self-supporting flame-retardant polymer electrolyte obtained by the method of claim 5.
